# EUROPÄISCHE PATENTSCHRIFT

(11) **EP 2 693 278 B1**
(45) Veröffentlichungstag und Bekanntmachung des Hinweises auf die Patenterteilung: **07.08.2019**
(21) Anmeldenummer: 13003139.6
(22) Anmeldetag: 20.06.2013
(51) Int. Cl.: G05B 9/03, B60W 50/023, G05B 19/406

(54) **Verfahren zur effizienten Absicherung sicherheitskritischer Funktionen eines Steuergeräts und Steuergerät**
Method for efficiently securing the safety-critical functions of a control device and control device
Procédé de sécurisation efficace de fonctions critiques en termes de sécurité d'un appareil de commande et appareil de commande

(30) Priorität: 31.07.2012 DE 102012015272
(43) Veröffentlichungstag der Anmeldung: 05.02.2014
(73) Patentinhaber: AUDI AG, 85045 Ingolstadt (DE)
(72) Erfinder: Wender, Stefan, 85055 Ingolstadt (DE); Kleinsorge, Alexander, 85055 Ingolstadt (DE)
(74) Vertreter: Thielmann, Frank

(56) Entgegenhaltungen:
- DE-A1- 10 007 008
- DE-A1-102006 008 958
- DE-A1-102009 054 106
- US-A1- 2008 319 622
- BANNATYNE R ED - INSTITUTE OF ELECTRICAL AND ELECTRONICS ENGINEERS: "HIGHLY DEPENDENT ELECTRONIC SYSTEMS FOR AUTOMOTIVE CONTROLS", VTC SPRING 2002. IEEE 55TH. VEHICULAR TECHNOLOGY CONFERENCE. PROCEEDINGS. BIRMINGHAM, AL, MAY 6 - 9, 2002; [IEEE VEHICULAR TECHNOLGY CONFERENCE], NEW YORK, NY : IEEE, US, Bd. 2, 6. Mai 2002 (2002-05-06), Seiten 665-669, XP001214374, DOI: 10.1109/VTC.2002.1002568 ISBN: 978-0-7803-7484-3

## Beschreibung

Die Erfindung betrifft ein Verfahren zum Betrieb eines wenigstens ein Eingangsdatum zu wenigstens einem Ausgangsdatum mittels eines Algorithmus verarbeitenden Steuergeräts.

Steuergeräte sind im Stand der Technik, beispielsweise in Land- und/oder Luftfahrzeugen, aber auch in der Medizintechnik, bereits weitgehend bekannt. Derartige Steuergeräte sind meist bestimmten Funktionen zugeordnet und verarbeiten Eingangsdaten, beispielsweise Sensorsignale und/oder aufbereitete Sensordaten, mittels eines Algorithmus zu Ausgangsdaten, die weiteren Steuerzwecken dienen und beispielsweise über einen Bus an einen Aktor übertragen unmittelbar zu einem Eingriff, bei einem Fahrzeug beispielsweise einem Bremseingriff oder dergleichen, führen und/oder von weiteren, zwischengeschalteten Steuergeräten verarbeitet werden, um die Notwendigkeit eines Eingriffs, mithin eines Steuerbefehls an einen Aktor, zu ermitteln.

Häufig werden Steuergeräte auch für sicherheitskritische Informationen eingesetzt, beispielsweise in Kraftfahrzeugen als Steuergeräte von Sicherheitssystemen und autonomen oder semiautonomen Fahrerassistenzsystemen. Sicherheitskritische Funktionen sind solche, die in einem (erheblichen) Maße die Gesamtsicherheit der Vorrichtung, in der das Steuergerät vorgesehen ist, beispielsweise ein Kraftfahrzeug, gefährden. Daher existieren Normen, um Anforderungen an die Sicherheit und Plausibilität der Ausgangsdaten der Steuergeräte zu erfüllen. Für Kraftfahrzeuge wurde beispielsweise die Norm ISO 26262 ("road vehicles - functional safety") geschaffen, eine ISO-Norm für sicherheitsrelevante elektrische und/oder elektronische Systeme in Kraftfahrzeugen. Durch die Umsetzung der Norm soll die funktionale Sicherheit eines Systems mit Steuergeräten der erfindungsgemäßen Art gewährleistet werden.

Im Stand der Technik ist es bekannt, bei Steuergeräten für sicherheitskritische Funktionen Prüfmaßnahmen zu verwenden, um Fehler bei der Ermittlung der Ausgangsdaten möglichst vor deren fehlerhaften Weiterverwendung zu erkennen. Diese Maßnahmen sollen meist zufällige Fehler, beispielsweise "single bit errors" (SBE) oder "single event upsets" (SEU), erkennen und somit im Fehlerfall sicherheitskritische Situationen unterbinden. Beispielsweise soll im Fall eines automatischen Notbremssystems verhindert werden, dass Elektronikfehler zur Auslösung einer nicht notwenigen Notbremsung führen.

Konkret ist es dafür bekannt, an kritischen Stellen die verwendete Hardware und/oder die verwendete Software doppelt auszulegen (z. B. Lockstep), um durch redundante Berechnung elektronische Fehler erkennen zu können. Beispielsweise wurde vorgeschlagen, wenigstens einen zusätzlichen Prozessor vorzusehen, der, insbesondere leicht zeitversetzt, gegebenenfalls unter Verwendung eines anderen Algorithmus, für den Benutzer zunächst unsichtbar ebenso das wenigstens eine Ausgangsdatum ermittelt. Stimmen die Ausgangdaten nicht überein, wird von einem Fehler ausgegangen. Prüfmaßnahmen können auch zyklische Selbsttests der beteiligten Hardware-komponenten und dergleichen umfassen.

Alle diese im Stand der Technik bekannten Maßnahmen sind sehr Ressourcen intensiv auf Softwareebene und/oder Hardwareebene, sodass die Kosten des Steuergerätes erhöht werden und die Leistungsfähigkeit des Steuergeräts erniedrigt wird, insbesondere auch im Hinblick darauf, dass durch zusätzlich arbeitende Hardwarekomponenten und zusätzliche Berechnungsschritte eine erhöhte Wärmeentwicklung und ein höherer Energiebedarf entsteht. Besonders deutlich treten diese Nachteile bei bildverarbeitenden Steuergeräten zu Tage. Sollen beispielsweise bestimmte Muster, beispielsweise eine Person, in Bildern einer Kamera aufgefunden werden, ist ein äußerst komplexer Berechnungsprozess gegeben, der oft in eine Vielzahl von sogenannten Hypothesen unterteilt wird, beispielsweise, wie groß die Wahrscheinlichkeit für einen Mensch bestimmter Größe in einem bestimmten Bildbereich ist und dergleichen. Nachdem derartige Steuergeräte kompakt gebaut werden müssen, muss eine sehr große Rechenleistung auf sehr kleinem Raum realisiert werden, idealerweise mit einer rein passiven Kühlung. Derartige bildverarbeitende Steuergeräte werden in Kraftfahrzeugen beispielsweise eingesetzt, um Daten einer das Vorfeld des Kraftfahrzeugs aufnehmenden Kamera auszuwerten.

DE 10 2008 060 011 A1 betrifft eine Sicherheitssteuerung und ein Verfahren zum Steuern einer automatisierten Anlage, die eine Vielzahl von Sensoren und eine Vielzahl von Aktoren umfasst. Dabei soll eine einfache und flexible Anzeige des Systemzustandes möglich sein. Hierzu wird von einer Diagnoseauswerteeinheit ein Betriebszustandsdatensatz erzeugt, der einen festgestellten Betriebszustand repräsentiert, und mit einer Schnittstelle für eine Anzeigeeinheit, die dazu ausgebildet ist, Diagnosemeldungen anzuzeigen, verbunden. Ein boolescher Statusanzeiger ermöglicht es, Aktoren, wie etwa eine Warnleuchte oder einen Summer, anzusteuern. Das dortige Anwenderprogramm umfasst ein Sicherheitssteuerungsmodul, welches in Abhängigkeit von sicherheitsrelevanten Steuerungseingangssignalen sicherheitsrelevante Steuerungsausgangssignale erzeugt, und ein Standardsteuerungsmodul, welches sonstige Steuerungseingangssignale in Steuerungsausgangssignale umwandelt.

DE 102 309 026 B4 betrifft ein Verfahren und eine Vorrichtung zur Verkehrsüberwachung, bei dem eine Verkehrsbildfolge von erzeugten Digitalbildern bezüglich Hypothesen qualitativ ausgewertet und normiert wird, um eine Verkehrssituation bewerten zu können, insbesondere Klassen von Verkehrsteilnehmern zu unterscheiden und eine Straßenverkehrsdichte zu erkennen.

DE 10 2009 054106 A1 offenbart ein Verfahren zur sicheren Ausgabe eines Ausgangsgröße für ein sicherheitskritisches Steuergerät eines Fahrzeugs, wobei die Ausgangsgröße durch zwei diversitär redundante Sicherheitspfade ermittelt wird und nur bei Übereinstimmung der ermittelten zwei Ausgangsgrößen, diese ausgegeben wird.

Der Erfindung liegt daher die Aufgabe zugrunde, eine Betriebsmöglichkeit für Steuergeräte anzugeben, welche bei Aufrechterhaltung der benötigten Sicherheitsanforderungen die Energie- und Leistungseffizienz des Steuergeräts zu steigern vermag und/oder die Kosten des Steuergeräts verringert.

Die Aufgabe wird mittels eines Verfahrens gemäß Anspruch 1 und einem Steuergerät gemäß Anspruch 9 gelöst. Zur Lösung dieser Aufgabe ist bei einem Verfahren der eingangs genannten Art erfindungsgemäß vorgesehen, dass ein Ausgangsdatum ermittelt wird, wonach überprüft wird, ob das Ausgangsdatum in einer ersten, nicht alle möglichen Ausgangsdaten enthaltenden Gruppe enthalten ist, wonach nur bei einem in der ersten Gruppe enthaltenen Ausgangsdatum zur Überprüfung des Ausgangsdatums eine zweite Ermittlung des Ausgangsdatums erfolgt.

Der Erfindung liegt die Erkenntnis zugrunde, dass viele Steuergeräte relativ zu ihrer Gesamtlaufzeit nur selten tatsächlich ein sicherheitskritisches Ausgangsdatum errechnen, insbesondere eines, dass einen Eingriff durch einen Aktor beschreibt und/oder zu einem Eingriff durch einen Aktor führt. Mit anderen Worten bedeutet dies, dass die meisten Steuergeräte nur sehr selten zur Schlussfolgerung der Notwendigkeit eines sicherheitskritischen Eingriffs gelangen. Beispiele hierfür sind automatische Bremseingriffe, Kollisionswarnungen, Lenkeingriffe zum Ausweichen, Airbag-Auslösungen und dergleichen. Überprüft beispielsweise ein bildverarbeitendes Steuergerät, ob sich ein Mensch in einem kritischen Bereich vor einem Kraftfahrzeug befindet, und ob mithin eine Notbremsung notwendig ist, so tritt ein solches Ereignis äußerst selten auf. Ansonsten werden die Ausgangsdaten des Steuergeräts einen Fall beschreiben, in dem kein Eingriff notwendig ist.

Die Erfindung schlägt nun vor, statt während der gesamten Laufzeit sämtliche Berechnungen redundant durchzuführen, die zusätzliche, zweite Ermittlung des Ausgangsdatums auf die Gruppe von Ausgangsdaten zu beschränken, die sicherheitskritisch sind. Sobald also beispielsweise die eigentliche, erste Ermittlung des Ausgangsdatums direkt oder indirekt zu einem Eingriff eines Aktors führen würde, erfolgt eine zweite, redundante Ermittlung, um das Ausgangsdatum zu überprüfen und mithin den durchzuführenden Eingriff abzusichern.

Im Gegensatz zu sogenannten "dual modular redundant"-Systemen sind nur für den (typischerweise seltenen) Aktionsfall/Eingriff, also bei sicherheitskritischen Ausgangsdaten, stets die Ergebnisse zweiter Einheiten/Berechnungen nötig. Es findet eine Verifikation bei Bedarf statt, das bedeutet, für Ausgangsdaten der ersten Gruppe (sicherheitskritische Ausgangsdaten) wird angenommen, es liege ein Fehler vor und überprüft. Diese Vorgehensweise ist speziell bei Systemen sinnvoll, bei denen ein Phantom (falsch-positive Erkennung) im Gegensatz zu einer Nichterkennung (falsch-negativ) die deutlich größere Gefahr darstellt.

Mithin ist es möglich, die Energieeffizienz des Steuergeräts zu steigern, nachdem insgesamt deutlich weniger Berechnungen durchgeführt werden müssen, denn sicherheitskritische Ausgangsdaten, also Daten der ersten Gruppe von Ausgangsdaten, treten weitaus seltener auf als sonstige Ausgangsdaten, die in einer zweiten Gruppe von Ausgangsdaten, die elementfremd zu der ersten Gruppe von Ausgangsdaten ist, einsortiert sein können. Für alle Ausgangsdaten der zweiten Gruppe, die äußerst häufig auftreten, tritt keine redundante zweite Ermittlung auf. Damit reduziert sich im Übrigen auch die Wärmeabgabe des Steuergeräts und es sind idealerweise weniger Hardware-Komponenten erforderlich, sodass auch das Gewicht des Steuergeräts reduziert werden kann. Jedoch auch die Einzelkosten von Komponenten des Steuergeräts können sich reduzieren, nachdem grundsätzlich weniger Gesamtleistung benötigt wird. Die Auslastung des Steuergeräts wird deutlich reduziert.

Besonders deutlich treten die Vorteile der vorliegenden Erfindung zu Tage, wenn das Betriebsverfahren für ein bildverarbeitendes Steuergerät und/oder ein Steuergerät eines Kraftfahrzeugs verwendet wird. Werden beispielsweise durch ein bildverarbeitendes Steuergerät eines Kraftfahrzeugs Bilder einer insbesondere auf das Vorfeld des Kraftfahrzeugs gerichteten Kamera ausgewertet, existiert ein hoher Rechenaufwand, wobei ein äußerst großer Anteil beispielsweise der überprüften Hypothesen zum Ergebnis führen wird, dass keine Gefahr/Gefährdungssituation vorliegt. Werden dennoch alle diese Rechnungen redundant, letztlich also doppelt, durchgeführt, entsteht ein massiver Berechnungsaufwand, der im Rahmen der vorliegenden Erfindung deutlich reduziert werden kann, denn sicherheitskritische Ergebnisse bzw.

Ausgangsdaten der Algorithmen sind äußerst selten, sodass nur ein äußerst geringer Teil der Berechnungen tatsächlich im Rahmen einer zweiten Ermittlung überprüft werden muss. Mithin ist annähernd eine Halbierung der benötigten Rechenleistung und somit eine entsprechende Verbesserung der Energieeffizienz bei bildverarbeitenden Steuergeräten möglich und als besonders vorteilhaft angesehen. Zudem ist allgemein in Kraftfahrzeugen eine deutliche Verbesserung gegeben, nachdem dort eine äußerst kompakte, energieeffiziente und auch wenig kühlintensive Bauweise benötigt bzw. bevorzugt wird. Grundsätzlich ist es jedoch auch denkbar, das erfindungsgemäße Verfahren für Steuergeräte anderer Vorrichtungen einzusetzen, nicht nur in anderen Fahrzeugen, wie beispielsweise Luftfahrzeugen, sondern auch beispielsweise im medizintechnischen Bereich, wo es häufig auch zu Bildverarbeitungen kommt, beispielsweise im Bereich der Fluoroskopie.

Wie bereits erwähnt, können als Ausgangsdaten der ersten Gruppe ein Eingriff durch einen Aktor beschreibende und/oder zu einem Eingriff durch einen Aktor führende Ausgangsdaten und/oder sicherheitskritische Ausgangsdaten verwendet werden. Insbesondere kann also immer dann, wenn eine tatsächliche Ansteuerung einer handelnden Komponente, also eines Aktors, auftritt, bzw. allgemein, wenn ein sicherheitskritisches Ausgangsdatum erhalten wird, eine Überprüfung erfolgen, also gerade in den Fällen, in denen sie wesentlich ist. So werden durch das erfindungsgemäße Verfahren Fehlauslösungen und dergleichen, die benutzerseitig Zweifel am Gesamtsystem aufkommen lassen würden, beispielsweise bei einem Notbremssystem, weitgehend vermieden, während in nicht sicherheitskritischen Fällen, in denen also nicht das Risiko einer Fehlauslösung besteht, eine Überprüfung eingespart wird.

Zur zweiten Ermittlung, die letztlich eine redundante Berechnung darstellt, sind verschiedene Möglichkeiten denkbar, die eine sinnvolle Überprüfung erlauben. So kann vorgesehen sein, dass die zweite Ermittlung des Ausgangsdatums unter Verwendung derselben Hardware, jedoch unter Verwendung eines anderen Algorithmus erfolgt. In diesem Fall wird also ein zweiter Algorithmus, insbesondere in einer Speichereinrichtung, abgelegt, der ebenso zur Ermittlung des Ausgangsdatums geeignet ist. Tritt nun ein Ausgangsdatum der ersten Gruppe auf, und nur dann, wird der zweite Algorithmus herangezogen, um eine zweite Ermittlung des Ausgangsdatums und eine entsprechende Überprüfung zu ermöglichen. So sollte man auf verschiedenen Wegen zum selben Ergebnis gelangen, sodass eine zweckmäßige Überprüfung gegeben ist.

Ferner ist es im Rahmen der vorliegenden Erfindung möglich, dass zur zweiten Ermittlung des Ausgangsdatums wenigstens eine redundante Hardwarekomponente, insbesondere ein weiterer Prozessor, verwendet wird. Selbstverständlich ist es dann auch denkbar, zusätzlich einen weiteren, zweiten Algorithmus zu verwenden. Auf diese Weise können auch Prozessorfehler, die sich gleich im Ergebnis manifestieren, detektiert werden. Zweckmäßig ist die Verwendung anderer Prozessoren beispielsweise dann, wenn eine Multicore-Umgebung mit mehreren Prozessoren, beispielsweise eine Dualcore-, eine Quadcore- oder auch eine Tricore-Umgebung verwendet wird. Dann kann gezielt ein anderer Prozessor mit den Berechnungen, die zum dem Ausgangsdatum der ersten Gruppe geführt haben, betraut werden.

In zweckmäßiger Ausgestaltung der vorliegenden Erfindung kann ferner vorgesehen sein, dass nach der Überprüfung und vor der zweiten Ermittlung ein Selbsttest wenigstens einer an der ersten und/oder der zweiten Ermittlung beteiligten Hardwarekomponente durchgeführt wird. Auch die Ergebnisse eines derartigen Selbsttests, der für die meisten Hardwarekomponenten im Stand der Technik bereits bekannt ist, können bei der Überprüfung des Ausgangsdatums berücksichtigt werden. Solche Selbsttests lassen sich äußerst schnell durchführen, beispielsweise innerhalb einer Mikrosekunde und können entsprechend hinzugefügt werden.

In einer Weiterbildung des erfindungsgemäßen Verfahrens kann nach der Überprüfung und vor der zweiten Ermittlung die Integrität des in einer Speichereinrichtung abgelegten Algorithmus und/oder des wenigstens einen in einer Speichereinrichtung abgelegten Eingangsdatums überprüft werden. Es ist also auch denkbar, zu überprüfen, ob ein beispielsweise durch einen Fehler in der Speichereinrichtung aufgetretener Fehler der Daten vorliegt, insbesondere der auf den Algorithmus, insbesondere die Software, bezogenen Daten und/oder auch der Eingangsdaten. Hierzu kann beispielsweise vorgesehen sein, dass zur Überprüfung der Datenintegrität ein Prüfwert verwendet wird und/oder ein CRC- und/oder ECC-Verfahren eingesetzt wird. Prüfwerte, insbesondere Prüfsummen, sind im Stand der Technik bereits weithin bekannt und können auch vorliegend eingesetzt werden, um die Datenintegrität zu überprüfen. Die zyklische Redundanzprüfung (cyclic redundancy check - CRC) ist ein bekanntes Verfahren, das einen Prüfwert für Daten bestimmt, um Fehler bei der Übertragung oder Speicherung erkennen zu können. ECC-Speicher ist eine bekannte Speicherart, die interne Datenkorruptionen detektieren und auch korrigieren kann. Dabei können Einzelbitfehler detektiert und korrigiert werden.

Dadurch, dass im erfindungsgemäßen Verfahren die zweite Ermittlung erst dann angestoßen wird, wenn durch das Ausgangsdatum ermittelt wurde, dass sie notwendig ist, ergibt sich eine gewisse Latenzzeit bis zur tatsächlichen Überprüfung der sicherheitskritischen Berechnung. Jedoch sind im erfindungsgemäßen Verfahren auch Möglichkeiten denkbar, um diese Latenzzeit zu minimieren. So kann in einem Ausführungsbeispiel vorgesehen sein, dass das wenigstens eine Eingangsdatum und/oder wenigstens ein Zwischenergebnis für die zweite Ermittlung in einer Speichereinrichtung vorgehalten wird, insbesondere bis zur Entscheidung, dass keine zweite Ermittlung erfolgt, und/oder bis zum Abschluss der Überprüfung anhand des Ergebnisses der zweiten Ermittlung. Eingangsdaten werden also mindestens solange in einer Speichereinrichtung des Steuergeräts vorgehalten, bis klar ist, ob sie noch weiter benötigt werden. So müssen die Daten nicht erst aufwendig neu beschafft werden, sondern können unmittelbar erneut vollständig prozessiert werden. Dieses Ausführungsbeispiel lässt sich vorteilhaft mit einer Überprüfung der Datenintegrität durch geeignete Methoden kombinieren.

In einem besonders vorteilhaften Ausführungsbeispiel kann die zweite Ermittlung auf für die Ermittlung des der ersten Gruppe angehörenden Ausgangsdatums ursächliche Berechnungsvorgänge beschränkt werden. Das bedeutet, dass nicht die gesamte Berechnung auf den Eingangsdaten zwangsläufig sicherheitskritisch sein muss, sodass die redundante Berechnung, also die zweite Ermittlung, auf den Teil eingeschränkt werden kann, der tatsächlich sicherheitskritisch ist. Mit anderen Worten schlägt die vorliegende Erfindung vor, die zweite Ermittlung zur Überprüfung möglichst partiell bzw. reduziert durchzuführen, indem nur die tatsächlich für das Ausgangsdatum der ersten Gruppe verantwortlichen Berechnungsvorgänge tatsächlich wiederholt werden, sodass hier deutlich Zeit eingespart werden kann.

Im Beispiel der Bildverarbeitung bedeutet dies, dass, wenn wie beschrieben die Bildauswertung auf einzelne Hypothesen aufgeteilt wird, nur die kritischste Hypothese verifiziert werden muss, also die, die zu dem Ausgangsdatum geführt hat und gegebenenfalls einen Eingriff erfordert. Es wird also nicht die gesamte Auswertung des gesamten Eingangsbildes wiederholt, sondern letztlich lediglich die entscheidende Hypothese. Zusammenfassend bedeutet dies, dass bei einem zur Bildverarbeitung ausgebildeten Steuergerät, welches mit den Hypothesen arbeitet, nur die bestätigte, zu dem Ausgangsdatum führende Hypothese überprüft wird.

Dabei kann im erfindungsgemäßen Verfahren selbstverständlich zusätzlich vorgesehen sein, dass die Ausgangsdaten nur bei einer Bestätigung durch die Überprüfung weiterverwendet werden. Das bedeutet, nur dann, wenn beide Ermittlungen, also Berechnungsvorgänge, dasselbe Ausgangsdatum liefern, wobei selbstverständlich gegebenenfalls ein Toleranzbereich bei kontinuierlichen Werten gegeben sein kann, wird das Ausgangsdatum tatsächlich verwendet, beispielsweise zur Auslösung eines Eingriffs eines Aktors oder dergleichen.

Neben dem Verfahren betrifft die vorliegende Erfindung auch ein Steuergerät, dass zur Durchführung des erfindungsgemäßen Verfahrens durch Steuerhardware und Steuersoftware ausgebildet ist. Sämtliche Ausführungen bezüglich des erfindungsgemäßen Verfahrens lassen sich analog auf das erfindungsgemäße Steuergerät übertragen, mit welchem mithin auch die Vorteile der Erfindung erzielt werden können.

Ein erfindungsgemäßes Steuergerät umfasst dabei vorzugsweise wenigstens einen Prozessor und wenigstens eine Speichereinrichtung, wobei es insgesamt möglich ist, Hardware und/oder Software einzusparen oder energieeffizienter auszulegen. Insbesondere handelt es sich bei dem erfindungsgemäßen Steuergerät um ein bildverarbeitendes Steuergerät, welches zudem in einem Kraftfahrzeug verbaut sein kann. Das erfindungsgemäße Steuergerät kann in einem Kraftfahrzeug einen Teil eines Sicherheitssystems und/oder eines Fahrerassistenzsystems bilden, wobei es beispielsweise als Eingangsdaten Bilder einer in den Kraftfahrzeug vorgesehenen Kamera auswerten kann, beispielsweise im Hinblick auf drohende Kollisionen und dergleichen.

Mithin kann im Rahmen der vorliegenden Erfindung ein Kraftfahrzeug geschaffen werden, welches wenigstens ein Sicherheitssystem und/oder Fahrerassistenzsystem umfasst, dem ein erfindungsgemäßes Steuergerät zugeordnet ist. Gerade in einem Kraftfahrzeug zeigen sich, wie dargelegt wurde, die Vorteile der vorliegenden Erfindung äußerst deutlich.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: einen Ablaufplan des erfindungsgemäßen Verfahrens,
- Fig. 2: ein erfindungsgemäßes Steuergerät, und
- Fig. 3: ein Kraftfahrzeug.

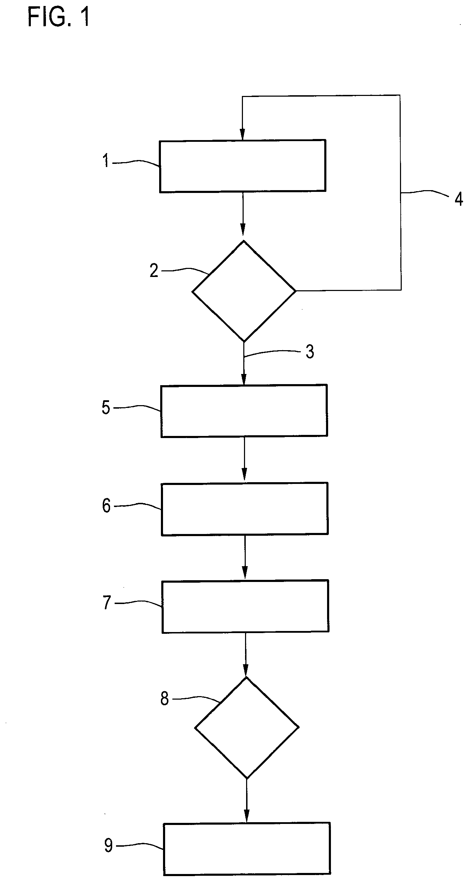

Fig. 1 zeigt einen prinzipiellen Ablaufplan eines Ausführungsbeispiels der vorliegenden Erfindung, welches ein Verfahren zum Betrieb eines Steuergeräts betrifft, das in dem Steuergerät selbst realisiert ist. Dabei sollen redundante Berechnungen zur Überprüfung von Ausgangsdaten immer nur dann durchgeführt werden, wenn tatsächlich ein sicherheitskritisches Ergebnis vorliegt, was anhand der Zugehörigkeit des wenigstens einen Ausgangsdatums zu einer ersten Gruppe von Ausgangsdaten, die nicht alle möglichen Ausgangsdaten enthält, sondern nur die sicherheitskritischen, hier die einen Eingriff beschreibenden oder zu einem Eingriff führenden, überprüft wird. Bei dem hier als Ausführungsbeispiel beschriebenen Steuergerät handelt es sich um ein bildverarbeitendes Steuergerät eines Kraftfahrzeugs, das einem Sicherheitssystem zugeordnet ist. Beispielsweise kann es sich um ein Fußgängerschutzsystem handeln, bei dem überprüft wird, ob in aufgenommenen Bildern einer Kamera des Kraftfahrzeugs ein Fußgänger in einer kritischen Position zu sehen ist. Ist dies der Fall, wird ein Ausgangsdatum erzeugt, welches als Eingriff durch einen Aktor eine Notbremsung und/oder eine Warnung auslösen kann.

Im Rahmen der Bildverabeitung werden dabei verschiedene Hypothesen einzeln überprüft, inwiefern beispielsweise in einem bestimmten Bildausschnitt eine Person bestimmter Größe sichtbar ist. Treffen bestimmte Hypothesen zu, schließt das Steuergerät, das ein Eingriff erforderlich ist. Das Ergebnis der Berechnungen des Steuergeräts mittels des zur Bildverarbeitung vorgesehenen Algorithmus ist mithin ein Ausgangsdatum, das in den meisten Fällen keine Gefahr anzeigen wird, wenn jedoch ein Fußgänger in einer gefährlichen Position festgestellt wurde, ein einen Eingriff erforderndes Ausgangsdatum ist.

Ein aktuelles Ausgangsdatum wird dabei gemäß Fig. 1 in einem Schritt 1 ermittelt.

In einem Schritt 2 wird überprüft, ob das Ausgangsdatum der ersten Gruppe von Ausgangsdaten oder einer zweiten Gruppe von nicht sicherheitskritischen Ausgangsdaten angehört. Gehört das Ausgangsdatum zur ersten Gruppe, Pfeil 3, wird eine zweite Ermittlung des Ausgangsdatums angestoßen, um dieses überprüfen zu können. Gehört das Ausgangsdatum nicht der ersten Gruppe von Ausgangsdaten an, so wird durch den Algorithmus, wie durch den Pfeil 4 angedeutet, mit neuen Eingangsdaten, also dem nächsten Bild der Kamera, eine erneute Ermittlung von neuen Ausgangsdaten vorgenommen.

In einem Schritt 5 führen nun zunächst alle für die erste und die nun folgende zweite Ermittlung benötigten Komponenten des Steuergeräts einen Selbsttest durch. Tritt hier bereits ein Fehler auf, ist dies ein Indiz für ein fehlerhaftes sicherheitskritisches Ausgangsdatum.

In einem Schritt 6 wird die Datenintegrität aller beteiligten Daten im Hinblick auf mögliche Speicherfehler überprüft. Zunächst ist festzuhalten, dass sowohl die Eingangsdaten als auch die gegebenenfalls benötigten Zwischenergebnisse solange in einer entsprechenden Speichereinrichtung vorgehalten werden, bis klar ist, dass sie nicht mehr für eine zweite Ermittlung benötigt werden bzw. die zweite Ermittlung abgeschlossen ist. Diese Daten können nun überprüft werden, beispielsweise anhand einer Prüfsumme bzw. eines Prüfwerts, insbesondere in einem CRC-Verfahren. Gleiches gilt aber auch für die gespeicherte Software der zu verwendenden Algorithmen, das bedeutet, auch der entsprechende Codespeicher in dem Steuergerät kann überprüft werden. Auch eine nicht vorhandene Datenintegrität ist ein deutliches Indiz für eine Fehlerhaftigkeit des sicherheitskritischen Ausgangsdatums.

In einem Schritt 7 wird dann die zweite Ermittlung durchgeführt, wofür mehrere Varianten im Rahmen der vorliegenden Erfindung denkbar sind. So ist es in diesem Ausführungsbeispiel zum einen möglich, dass dieselbe Hardware, insbesondere der wenigstens eine selbe Prozessor verwendet wird, jedoch ein anderer Algorithmus als der im Rahmen der ersten Ermittlung des Ausgangsdatums verwendete Algorithmus verwendet wird. Möglich ist es aber auch, dass wenigstens ein Prozessor, sei er redundant vorgesehen oder aus anderen Gründen, beispielsweise in einem Mulitcore-System, nicht an der ersten Ermittlung beteiligt gewesen, gezielt mit der zweiten Ermittlung beauftragt wird. Selbstverständlich kann auch hier ein anderer Algorithmus verwendet werden.

In jedem Fall gilt aber, dass nur der tatsächlich für das Ausgangsdatum ursächliche Teil der Berechnungen überprüft wird, vorliegend mithin die Hypothese, die zu dem Ausgangsdatum der ersten Gruppe geführt hat. Ist die Position bzw. die Nummer der Hypothese aber schon bekannt, bevor das aktuelle Bild als Eingangsdaten prozessiert wird, ist nur der Rechenaufwand bzw. die Rechenzeit für die Verifikation dieser einen Hypothese zusätzlich nötig. Die zweite Ermittlung wird also auf den sicherheitskritischen Teil der letzten Berechnungsvorgänge eingeschränkt.

In einem Schritt 8 werden dann Kriterien betrachtet, die die letztendliche Überprüfung des Ausgangsdatums der ersten Gruppe darstellen. Diese können selbstverständlich auch die Ergebnisse der Schritte 5 und 6 berücksichtigen. Nur dann, wenn festgestellt wird, dass die Ausgangsdaten (gegebenenfalls innerhalb eines Toleranzbereichs) übereinstimmen, die in der ersten und der zweiten Ermittlung berechnet wurden, wird das Ausgangsdatum gemäß Schritt 9 auch weiterverwendet, insbesondere, indem es auf ein Bussystem des Kraftfahrzeugs gegeben wird und dort beispielsweise den Eingriff durch einen Aktor, beispielsweise einen Bremseingriff, auslöst, und/oder zu einem Eingriff führend in einem anderen Steuergerät weiterverarbeitet wird.

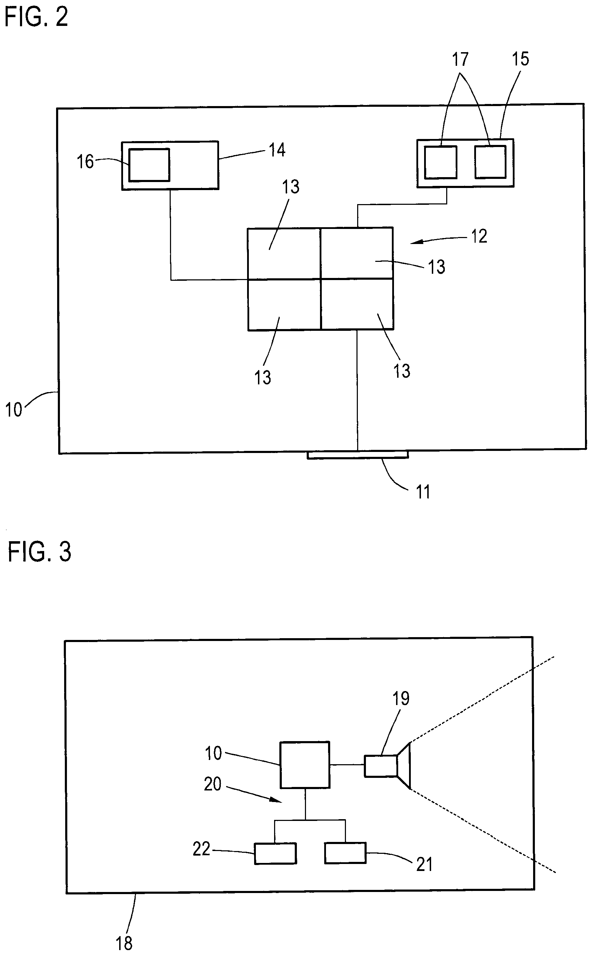

Fig. 2 zeigt eine Prinzipskizze eines erfindungsgemäßen Steuergeräts 10. Dieses weist neben einer Schnittstelle 11 zu einem Bussystem des Kraftfahrzeugs einen Quadcore 12 mit vier Prozessoren 13 auf. Zudem sind im Ausführungsbeispiel gemäß Fig. 2 zwei Speichereinrichtungen 14 und 15 vorgesehen, wobei die Speichereinrichtung 14 der Speicherung von Daten, insbesondere also auch der Eingangsdaten 16, dient. Die Speichereinrichtung 15 ist ein Codespeicher, in dem im Rahmen der Ermittlung von Ausgangsdaten und der Durchführung des erfindungsgemäßen Verfahrens verwendete Algorithmen 17 eingespeichert sind.

Das bildverarbeitende Steuergerät 10, welches einem Sicherheitssystem eines Kraftfahrzeugs zugeordnet ist, ist durch entsprechende Steuerhardware und -software zur Durchführung des erfindungsgemäßen Verfahrens ausgebildet, sodass vorliegend das Ausführungsbeispiel des erfindungsgemäßen Verfahrens nach Fig. 1 dort abläuft.

Fig. 3 zeigt beispielhaft die Verwendung des Steuergeräts 10 in einem Kraftfahrzeug 18, dort einem Sicherheitssystem zugeordnet. Das Kraftfahrzeug 18 weist eine auf das Vorfeld des Kraftfahrzeugs 18 gerichtete Kamera 19 auf, welche ihre Bilddaten als Eingangsdaten an das Steuergerät 10 übertragt. Über ein Bussystem 20, beispielsweise einen CAN-Bus kann das Steuergerät 10 mit weiteren Fahrzeugsystemen, insbesondere Aktoren, kommunizieren, wobei hier beispielshalber ein Bremssystem 21 und eine zur Warnung ausgebildete Anzeigevorrichtung 22 gezeigt sind, die Ausgangsdaten des Steuergeräts 10 als Aktoren auswerten können.

## Patentansprüche

1. Verfahren zum Betrieb eines bildverarbeitenden Steuergeräts (10), wobei ein Ausgangsdatum mittels eines zur Bildverarbeitung vorgesehenen Algorithmus (17) aus wenigstens einem Eingangsdatum ermittelt wird,
wobei das Eingangsdatum ein Bild einer Kamera (19) ist,
wobei überprüft wird, ob das Ausgangsdatum in einer ersten, nicht alle möglichen Ausgangsdaten enthaltenden Gruppe enthalten ist,
wonach nur bei einem in der ersten Gruppe enthaltenen Ausgangsdatum zur Überprüfung des Ausgangsdatums eine zweite Ermittlung des Ausgangsdatums erfolgt,
wobei die erste, nicht alle möglichen Ausgangsdaten enthaltende Gruppe einen Eingriff durch einen Aktor beschreibende und/oder zu einem Eingriff durch einen Aktor führende Ausgangsdaten, sowie sicherheitskritische Ausgangsdaten umfasst.

2. Verfahren nach Anspruch 1, **dadurch gekennzeichnet, dass** das Steuergerät (10) ein Steuergerät (10) eines Kraftfahrzeugs (18) ist.

3. Verfahren nach einem der vorangehenden Ansprüche, **dadurch gekennzeichnet, dass** die Ausgangsdaten nur bei einer Bestätigung durch die Überprüfung weiterverwendet werden.

4. Verfahren nach einem der vorangehenden Ansprüche, **dadurch gekennzeichnet, dass** die zweite Ermittlung des Ausgangsdatums unter Verwendung der selben Hardware, jedoch unter Verwendung eines anderen Algorithmus (17) erfolgt oder wenigstens eine Hardwarekomponentezur zweiten Ermittlung des Ausgangsdatums verwendet wird.

5. Verfahren nach einem der vorangehenden Ansprüche, **dadurch gekennzeichnet, dass** nach der Überprüfung und vor der zweiten Ermittlung ein Selbsttest wenigstens einer an der ersten und/oder der zweiten Ermittlung beteiligten Hardwarekomponente durchgeführt wird.

6. Verfahren nach einem der vorangehenden Ansprüche, **dadurch gekennzeichnet, dass** nach der Überprüfung und vor der zweiten Ermittlung die Integrität des in einer Speichereinrichtung (15) abgelegten Algorithmus (17) und/oder des wenigstens einen in einer Speichereinrichtung (14) abgelegten Eingangsdatums überprüft wird.

7. Verfahren nach Anspruch 6, **dadurch gekennzeichnet, dass** zur Überprüfung der Datenintegrität ein Prüfwert verwendet wird und/oder ein CRC- und/oder ein ECC-Verfahren eingesetzt wird.

8. Verfahren nach einem der vorangehenden Ansprüche, **dadurch gekennzeichnet, dass** das wenigstens eine Eingangsdatum und/oder wenigstens ein Zwischenergebnis für die zweite Ermittlung in einer Speichereinrichtung (14) vorgehalten wird.

9. Steuergerät (10), ausgebildet zur Durchführung eines Verfahrens nach einem der vorangehenden Ansprüche durch Steuerhardware und Steuersoftware.

## Claims

1. Method for operating an image processing control device (10), wherein a output datum is determined from at least one input datum by means of an algorithm (17) provided for image processing, wherein the input datum is an image of a camera (19), wherein it is checked whether the output datum is contained in a first group which does not contain all possible output data, after which a second determination of the output datum occurs to check the output datum only in the case of an output datum contained in the first group, wherein the first group which does not contain all possible output data comprises output data describing an intervention by an actuator and/or leading to an intervention by an actuator as well as security-critical output data.

2. Method according to claim 1, **characterised in that** the control device (10) is a control device (10) of a motor vehicle (18).

3. Method according to any one of the preceding claims, **characterised in that** the output data are further used only in the case of a confirmation by the checking.

4. Method according to any one of the preceding claims, **characterised in that** the second determination of the output datum occurs using the same hardware, however using a different algorithm (17) or at least one hardware component is used for the second determination of the output datum.

5. Method according to any one of the preceding claims, **characterised in that** after the checking and before the second determination, a self-test of at least one hardware component involved in the first and/or the second determination is implemented.

6. Method according to any one of the preceding claims, **characterised in that** after the checking and before the second determination, the integrity of the algorithm (17) stored in a storage device (15) and/or of the at least one input datum stored in a storage device (14) is checked.

7. Method according to claim 6, **characterised in that** a test value is used to check the data integrity and/or a CRC and/or an ECC method is used.

8. Method according to any one of the preceding claims, **characterised in that** the at least one input datum and/or at least one intermediate result for the second determination is held in a storage device (14).

9. Control device (10), formed for implementing a method according to any one of the preceding claims by control hardware and control software.

## Revendications

1. Procédé de fonctionnement d'un appareil de commande de traitement d'image (10),
dans lequel une donnée de sortie est déterminée à partir d'au moins une donnée d'entrée au moyen d'un algorithme (17) prévu pour le traitement d'image,
dans lequel la donnée d'entrée est une image d'une caméra (19),
dans lequel il est vérifié si la donnée de sortie est contenue dans un premier groupe ne contenant pas toutes les données de sortie possibles,
après quoi une deuxième détermination de la donnée de sortie a lieu uniquement dans le cas d'une donnée de sortie contenue dans le premier groupe pour la vérification de la donnée de sortie,
dans lequel le premier groupe ne contenant pas toutes les données de sortie possibles comprend des données de sortie décrivant une intervention par un actionneur et/ou conduisant à une intervention par un actionneur, ainsi que des données de sortie critiques en termes de sécurité.

2. Procédé selon la revendication 1, **caractérisé en ce que** l'appareil de commande (10) est un appareil de commande (10) d'un véhicule automobile (18).

3. Procédé selon l'une quelconque des revendications précédentes, **caractérisé en ce que** les données de sortie ne sont réutilisées que lors d'une confirmation par la vérification.

4. Procédé selon l'une quelconque des revendications précédentes, **caractérisé en ce que** la deuxième détermination de la donnée de sortie a lieu en utilisant le même matériel, mais en utilisant un autre algorithme (17) ou au moins un composant de matériel est utilisé pour la deuxième détermination de la donnée sortie.

5. Procédé selon l'une quelconque des revendications précédentes, **caractérisé en ce qu'**un autotest d'au moins un composant de matériel impliqué dans la première et/ou la deuxième détermination est effectué après la vérification et avant la deuxième détermination.

6. Procédé selon l'une quelconque des revendications précédentes, **caractérisé en ce que** l'intégrité de l'algorithme (17) déposé dans un dispositif de stockage (15) et/ou de l'au moins une donnée d'entrée déposée dans un dispositif de stockage (14) est vérifiée après la vérification et avant la deuxième détermination.

7. Procédé selon la revendication 6, **caractérisé en ce qu'**une valeur de contrôle est utilisée pour la vérification de l'intégrité des données et/ou un procédé CRC et/ou un procédé ECC est mis en oeuvre.

8. Procédé selon l'une quelconque des revendications précédentes, **caractérisé en ce que** l'au moins une donnée d'entrée et/ou au moins un résultat intermédiaire est mis à disposition pour la deuxième détermination dans un dispositif de stockage (14).

9. Appareil de commande (10), réalisé pour la réalisation d'un procédé selon l'une quelconque des revendications précédentes par un matériel de commande et logiciel de commande.
